## Europäisches Patentamt

## European Patent Office

## Office européen des brevets

(11) Numéro de publication: **0 180 531 B1**

## FASCICULE DE BREVET EUROPEEN

(45) Date de publication du fascicule du brevet:
12.04.89

(51) Int. Cl.⁴: **B03B 9/06, C10L 5/48**

(21) Numéro de dépôt: 85450023.8

(22) Date de dépôt: **21.10.85**

(54) **Procédé d'obtention d'un matériau moulable ou extrudable à base de matériaux combustibles provenant de la récupération notamment d'ordures ménagères et matériau ainsi obtenu.**

(30) Priorité: **22.10.84 FR 8416232**

(43) Date de publication de la demande:
**07.05.86 Bulletin 86/19**

(45) Mention de la délivrance du brevet:
**12.04.89 Bulletin 89/15**

(84) Etats contractants désignés:
**BE DE IT**

(56) Documents cités:
**BE-A- 891 875**
**GB-A- 2 076 013**
**US-A- 4 113 185**
**US-A- 4 225 640**

(73) Titulaire: **Boucher, Jean-Claude, 24 rue Labertranne, F-64600 Anglet(FR)**

(72) Inventeur: **Boucher, Jean-Claude, 24 rue Labertranne, F-64600 Anglet(FR)**

(74) Mandataire: **Thébault, Jean-Louis, Cabinet Thébault S.A. 50 Cours de Verdun, F-33000 Bordeaux(FR)**

ACTORUM AG

## Description

La présente invention a trait à la récupération notamment d'ordures ménagères et plus particulièrement à un procédé d'obtention, à partir de matériaux combustibles provenant desdites ordures ménagères, d'un matériau ou composé moulable et extrudable susceptible de diverses applications.

Le but de l'invention est de réaliser une meilleure récupération notamment des ordures ménagères en permettant le recyclage d'un plus grand nombre de déchets et tout particulièrement des matériaux combustibles.

Ces matériaux, tels que papiers, plastiques, laines, cotons, bois, n'ont pas de caractéristiques de plasticité convenables pour être utilisés dans des technologies d'extrusion ou de moulage, le matériau composite susceptible d'être obtenu directement à partir de ces matières récupérées ne présentant pas les caractéristiques physico-chimiques requises pour se substituer aux matériaux plastiques habituels.

Dans le document US 4 225 640 est décrite une technique d'obtention par moulage ou extrusion d'un produit composite comprenant des matières plastiques et des fragments de feuilles d'arbres, ces deux types de matières de base provenant, d'une part, des ordures ménagères et, d'autre part, de la collecte des feuilles mortes.

Toutefois, les produits ainsi obtenus présentent une faible résistance mécanique et sont d'une utilisation limitée du fait de la structure interne et de la forme des produits moulés ou extrudés, à savoir des éléments plats analogues à une structure feuilletée puisqu'incluant des couches superposées de fragments de feuilles de dimensions relativement importantes.

L'invention vise à permettre l'obtention, à partir d'une gamme beaucoup plus larges de matières de récupération, d'un matériau composite moulable et extrudable dont la contexture et les propriétés physico-chimiques, notamment la résistance mécanique, autorisent son usage dans de nombreuses applications.

A cet effet, l'invention a pour objet un procédé d'obtention d'un matériau ou composé moulable et extrudable à partir de matériaux, en particulier de matières plastiques, de récupération provenant notamment d'ordures ménagères, lesdites matériaux étant broyés ou déchiquetés, mélangés et chauffés en vue de leur moulage ou extrusion, ledit procédé étant caractérisé en ce qu'il consiste:

– à sélectionner dans lesdites ordures les matériaux combustibles ou assimilés tels que papiers, cartons, plastiques, matières textiles, matières fibreuses, matières ligneuses, etc...,
– à ajouter à ces matériaux à titre d'adjuvants des matériaux, en particulier de récupération, provenant de l'un ou de plusieurs des trois groupes formés par les plastiques usagés, les écorces d'arbre, et les débris végétaux, en mélangeant intimement, après broyage ou déchiquetage approprié, ces adjuvants auxdits matériaux combustibles à raison de 5% à 100% environ du poids de ces derniers;
– à éliminer l'eau dudit mélange, et
– à chauffer à la température d'injection ou extrusion, puis injecter ou extruder le matériau composite résultant suivant les applications envisagées.

La première phase de ce processus est la sélection des matériaux combustibles. Cette sélection s'opère par exemple dans les usines de traitement d'ordures ménagères ou par des collectes spécialisées.

Ces matériaux sont sélectionnés dans l'état où ils se trouvent c'est-à-dire isolés et éventuellement grossièrement débarrassés d'éventuels corps étrangers et ne subissent pas de préparation spéciale avant leur mélange avec lesdits adjuvants.

Ces matériaux peuvent se présenter sous une forme quelconque, en feuille, massive, dispersée, entière ou réduite en morceaux ou particules. Parmi les matériaux combustibles on exclut bien entendu les déchets organiques.

Les adjuvants sont avantageusement, quoique non nécessairement, des produits de récupération. Il peut s'agir en premier lieu d'éléments ou d'objets en matière plastique thermofusible usagés et récupérés spécialement pour cette utilisation. Ces éléments ou objets sont par exemple des matières en feuilles ou en blocs ayant servi par exemple de conditionnements (sacs, emballages, éléments de protection, récipients).

Ces produits sont, avant d'être mélangés auxdits matériaux combustibles, préalablement déchiquetés ou réduits en pièces d'une taille inférieure à 20cm x 20cm par exemple pour les matières plates.

Comme adjuvants on peut aussi utiliser seuls ou en association avec lesdits produits plastiques de récupération, des écorces d'arbres ou des débris végétaux avantageusement broyés ou réduits à une granulométrie de particule n'excédant pas 3mm en vue d'obtenir un composé dont les caractéristiques de plasticité soient adaptées à la confection d'objets moulés ou extrudés. Ces écorces ou débris végétaux peuvent venir de récupération par exemple de scieries, de papeteries, des nettoyages d'exploitations forestières.

Avantageusement les adjuvants sont dosés, dans le mélange avec les matériaux combustibles de récupération, dans une proportion d'environ 5% à 100% du poids de ces derniers.

Les constituants de ce mélange sont donc peu onéreux et leur réutilisation participe à l'effort de dépollution.

Le mélange intime est assuré mécaniquement par tous moyens connus appropriés.

Le produit obtenu est ensuite déshydraté ou subit un chauffage approprié en vue d'éliminer l'eau contenue. Le produit est ainsi porté entre 40 et 100°C environ au cours de cette phase.

Il est ensuite porté à sa température de travail, entre 60 et 160°C.

Cela s'opère par tous moyens appropriés et de préférence dans une extrudeuse continue à vis chauffante.

Le matériau final obtenu dispose alors d'une plasticité suffisante pour être extrudé au travers d'une filière droite ou en angle ou injecté dans un moule.

Le matériau injecté ou extrudé a une texture et des caractéristiques voisines de celles du bois et peut être cloué, vissé et scié avec l'outillage propre au travail du bois.

Ce matériau peut être mis en forme de diverses manières suivant les applications envisagées.

On peut en faire par exemple des piquets de section pleine, à usage agricole ou dans les travaux publics ou domestiques.

On peut en faire des conduits tubulaires pour canalisations de drainage, de distribution d'eau d'arrosage, de passage de câbles etc...

On peut au cours de l'extrusion ou du moulage introduire un ou plusieurs éléments d'armature de diverse nature de façon à obtenir un objet composite.

Le matériau peut également être extrudé coaxialement autour d'un noyau plein ou tubulaire de façon à conférer une protection contre la corrosion audit noyau, en particulier métallique.

## Revendications

1. Procédé d'obtention d'un matériau ou composé moulable et extrudable à partir de matériaux, en particulier de matières plastiques, de récupération provenant notamment d'ordures ménagères, lesdites matériaux étant broyés ou déchiquetés, mélangés et chauffés en vue de leur moulage ou extrusion, ledit procédé étant caractérisé en ce qu'il consiste:
   - à sélectionner dans lesdites ordures les matériaux combustibles ou assimilés tels que papiers, cartons, plastiques, matières textiles, matières fibreuses, matières ligneuses, etc...,
   - à ajouter à ces matériaux à titre d'adjuvants des matériaux, en particulier de récupération, provenant de l'un ou de plusieurs des trois groupes formés par les plastiques usagés, les écorces d'arbre, et les débris végétaux, en mélangeant intimement, après broyage ou déchiquetage approprié, ces adjuvants auxdits matériaux combustibles à raison de 5% à 100% environ du poids de ces derniers;
   - à éliminer l'eau dudit mélange, et
   - à chauffer à la température d'injection ou extrusion, puis injecter ou extruder le matériau composite résultant suivant les applications envisagées.

2. Procédé suivant la revendication 1, caractérisé en ce que lesdits matériaux adjuvants sont des éléments de matière plastique en feuilles déchiquetés en pièces n'excédant pas 20cm x 20cm.

3. Procédé suivant la revendication 1, caractérisé en ce que lesdits matériaux adjuvants sont des écorces d'arbres ou des débris végétaux broyés à une granulométrie de particule n'excédant pas 3mm.

4. Procédé suivant la revendication 1, caractérisé en ce qu'au cours de l'élimination de l'eau la température du mélange est porté entre 40 et 100°C.

5. Procédé suivant la revendication 1, caractérisé en ce qu'au cours du chauffage pour amener le produit à la température de moulage ou extrusion, le produit est porté à une température comprise entre 60 et 160°C environ.

6. Procédé suivant l'une des revendications 1 à 5, caractérisé en ce que, de préférence, l'élimination de l'eau et la mise à la température de moulage ou extrusion sont effectuées simultanément.

7. Procédé suivant la revendication 6, caractérisé en ce que lesdites opérations sont réalisées dans une extrudeuse continue ou discontinue à vis chauffante.

8. Matériau composite moulable ou extrudable obtenu conformément au procédé suivant l'une quelconque des revendications 1 à 7.

## Patentansprüche

1. Verfahren zur Gewinnung eines verformbaren oder extrudierbaren Materials oder Zusammensetzung, insbesondere aus Hausabfällen stammendem Recyclingmaterial, vorzugsweise Plastikmaterial, wobei das besagte Material zerkleinert oder zerstückelt, gemischt und zum Formen oder Extrudieren erhitzt wird, wobei das besagte Verfahren dadurch gekennzeichnet ist, daß es darin besteht, daß
   - aus den besagten Abfällen die verbrennbaren oder gleichgestellten Materialien wie Papier, Karton, Plastik, Textilmaterial, Fasermaterial, holzartiges Material etc. aussortiert,
   - diesen Materialien als Hilfsstoffe Materialien, insbesondere Recyclingmaterialien, die aus einer oder mehreren von drei Gruppen stammen, die gebildet werden durch gebrauchtes Plastikmaterial, Baumrinde und Pflanzenreste, nach geeigneter Zerkleinerung oder Zerstückelung unter innigem Mischen zugesetzt werden, wobei diese Hilfsstoffe etwa 5 bis 100 Gew.-% des besagten Materials ausmachen,
   - das Wasser aus der besagten Mischung entfernt und
   - auf Spritz- oder Extrusionstemperatur erhitzt und dann das Kompositmaterial gemäß den vorgesehenen Anwendungen gespritzt oder extrudiert wird.

2. Verfahren nach Anspruch 1, dadurch gekennzeichnet, daß die besagten Hilfsmaterialien Elemente von folienförmigem Plastikmaterial sind, die in Stücke nicht größer als 20cm x 20cm zerstückelt sind.

3. Verfahren nach Anspruch 1, dadurch gekennzeichnet, daß die besagten Hilfsmaterialien aus Baumrinde oder Pflanzenabfällen bestehen, die auf eine Teilchengröße, die 3mm nicht überschreitet, zerkleinert sind.

4. Verfahren nach Anspruch 1, dadurch gekennzeichnet, daß während der Entfernung des Wassers die Temperatur der Mischung auf 40 bis 100°C gebracht wird.

5. Verfahren nach Anspruch 1, dadurch gekennzeichnet, daß während des Erhitzens zum Bringen des Produkts auf die Verformungs- oder Extrusionstemperatur das Produkt auf eine Temperatur von etwa 60 bis 160°C gebracht wird.

6. Verfahren nach einem der Ansprüche 1 bis 5, dadurch gekennzeichnet, daß vorzugsweise die Wasserentfernung und das Bringen auf Verformungs- oder Extrusionstemperatur gleichzeitig vorgenommen werden.

7. Verfahren nach Anspruch 6, dadurch gekennzeichnet, daß die besagten Schritte in einem kontinuierlich oder diskontinuierlich arbeitenden Extruder mit heizbarer Schnecke durchgeführt werden.

8. Verformbares oder extrudierbares Kompositmaterial, erhalten entsprechend dem Verfahren nach einem der Ansprüche 1 bis 7.

## Claims

1. Process for obtaining a mouldable and extrudable material or compound from materials, specifically plastics, recovered chiefly from household refuse, the said materials being crushed or shredded, mixed and heated before moulding or extrusion, the said process being characterized in that it consists in:
   - selecting from the said refuse the combustible or similar materials such as paper, cardboard, plastics, fibrous, textile and ligneous materials etc.;
   - adding to these materials by way of admixtures, other recycled materials, from one or more of the following three groups: used plastics, tree bark, and vegetable matter; after the appropriate crushing or shredding process has been carried out, the said admixtures should be added in a ratio of approximately 5% to 100% by weight of the combustible materials and mixed thoroughly;
   - eliminating any water from the mixture and
   - heating the mixture to the injection moulding or extrusion temperature, then injecting or extruding the obtained composite material according to requirements.

2. Process as claimed in claim 1, characterized in that the said admixtures are formed from pieces of sheet plastic not exceeding 20cm x 20cm in size.

3. Process as claimed in claim 1, characterized in that the said admixtures are formed from tree bark or vegetable matter crushed to particles not exceeding 3mm in size.

4. Process as claimed in claim 1, characterized in that during elimination of the water, the mixture is maintained at a temperature of between 40 and 100°C.

5. Process as claimed in claim 1, characterized in that the product is brought to a temperature of between 60 and 160°C during heating to extrusion or moulding temperature.

6. Process as claimed in any of the claims 1 to 5, characterized in that the processes of elimination of the water and of heating the mixture to the moulding or extrusion temperature are carried out simultaneously.

7. Process as claimed in claim 6, characterized in that the said operations are carried out in a continous or discontinuous heated screw extruder.

8. Mouldable or extrudable composite obtained by the process according to any of the claims 1 to 7.